# EUROPEAN PATENT SPECIFICATION

(11) **EP 1 400 392 B1**
(45) Date of publication and mention of the grant of the patent: **01.02.2006**
(21) Application number: 03255920.5
(22) Date of filing: 22.09.2003
(51) Int. Cl.: B60K 37/04, B60J 3/02

(54) **Driver console sun shield**
Sonnenblende für eine Fahrzeugskonsole
Paresoleil pour tableau de bord

(30) Priority: 20.09.2002 GB 0221862
(43) Date of publication of application: 24.03.2004
(73) Proprietor: Bombardier Transportation GmbH, 13627 Berlin (DE)
(72) Inventor: Gelbert, Lutz, 12555 Berlin (DE); Lange, Thomas, 13088 Berlin (DE); Wessner, Claudia, 10405 Berlin (DE)
(74) Representative: Broydé, Marc

(56) References cited:
- FR-A- 2 768 664
- KR-B- 165 791
- US-A- 4 940 274
- US-A- 5 158 334
- US-A- 6 007 135

## Description

The present invention relates to a sun shield device and more particularly to a driver console for a vehicle incorporating such a shield.

In modem rail vehicles, particularly in the case of high-speed trains, the driver's cabin is increasingly sophisticated in design and equipment. To meet modem standards of service and safety, visibility must be optimised, while increasing numbers of screens and instruments must be integrated into the console in such a way that they are easily visible to the driver under all circumstances.

A particular problem for modem consoles is the effect of adverse lighting conditions. Strong sunlight, especially from the side or above, can reflect off the surfaces of instruments and screens making them practically unreadable or requiring the driver's eyes to accommodate to the light conditions. This adjustment of the driver's eyes takes some time, during which the instruments cannot be properly read and his attention is not on the track. While standard analogue dials may be particularly affected only when there is direct reflection of the incident light in the direction of the driver's eyes, screens such as CRT or LCD screens, increasingly used to provide information to the driver, are very sensitive to ambient light over a much greater range of angles. To alleviate this problem, the driver's console may be provided with an overhanging rim which can serve as a shield to reduce incident light on the instrument panels. Such an arrangement is disclosed according to document DE4005605 A1 (see Fig 2 above reference 6). In the past however, these shields have proven insufficient in providing adequate shielding for the instrument panel. Increasing their size is in many cases not practical without reducing overall visibility for drivers of different heights or who have chosen different seating positions.

Another solution has been found by setting the display deeper in a well in the instrument panel whereby it is better shielded from incident light. This however requires the console itself to be deeper and is undesirable from the point of view of space limitation, weight reduction and crashworthiness, particularly where a number of separate displays must be integrated in this way.

It is known, particularly in the field of motor vehicles, to employ visors to reduce blinding of the driver. Such visors generally take the form of flip down shields in the roof area of the driver's compartment which can be lowered to counter strong sunlight from in front. They may also be rotatable to the side to reduce glare from the side and can even incorporate surfaces which are extendable in order to increase the overall size of the visor. Such shields are in general adapted to shield the driver's eyes directly from the glare of the sun. According to US-A-5044685 there is disclosed a flat shield, which may be attached by magnets to a bendable plate: The bendable plate can be attached by hook-and-loop fasteners to an appropriate surface of a vehicle dashboard.

A further arrangement is known from US-A-4940274 in which a hood glare shield includes a panel slideable transversely in a resilient base. The panel prevents glare caused by e.g. sunlight reflected from the vehicle hood or bonnet from blinding a driver.

There is therefore a need for an improved console arrangement by which the effects of adverse lighting conditions can be mitigated. It has now been found that the console can be provided with a moveable visor to shield it from unwanted glare. According to the present invention there is thus provided a vehicle console having an instrument panel and including a guide extending along the console and a visor slideably mounted to the guide for movement therealong to a chosen location to provide shielding from incident light from a particular direction.

There is also provided according to the present invention a method of reducing incident light on an instrument panel of a vehicle console, the method comprising providing a guide extending along the console; providing a moveable visor slideably mounted to the guide; and moving the moveable visor relative to the vehicle console to a chosen location to provide shielding from incident light from a particular direction. In order to increase the efficacy of the method, movement of the visor to the chosen location may be automated.

In order to increase the versatility of the visor in reducing incident light on the instrument panel it is particularly desirable that the visor be moveable in all possible directions. According to a preferred embodiment of the present invention, the visor is moveable in a direction generally parallel to the plane of the shield to accommodate for light from different directions. According to a further embodiment the visor may additionally be moveable in a direction generally out of the plane of the shield to accommodate for light from different elevations. This may be achieved by a tilting of all or part of the visor. It is furthermore desirable that the visor is itself extendable in its own plane whereby a greater shielding effect can be provided at the chosen location. It is additionally desirable that movement of the visor may be all or partially automated thereby ensuring easy positioning by the driver even when the visor is beyond easy arm's reach. Further aspects and advantages of the present invention are embodied in the dependent claims.

Embodiments of the present invention will now be described, by way of example only, having reference to the accompanying figures, in which:
Figure 1 is a plan view of a vehicle console according to the present invention with a centrally located visor;
Figure 2 is a cross sectional view of the console of Figure 1 along line 2 - 2;
Figure 3 is a front elevation of the console of Figure 1;
Figure 4 is a cross sectional view of the visor taken along the line 4 - 4 of figure 2;
Figure 5 is a similar plan view of the console of Figure 1 with the visor positioned to the left and extended;
Figure 6 is a cross sectional view of the console according to Figure 5 along line 6 - 6;
Figure 7 is a second embodiment of a vehicle console according to the present invention including a tiltable visor;
Figure 8 is a cross sectional view of the console according to Figure 7 along line 8 - 8;
Figure 9 is a cross sectional view of a third embodiment of a vehicle console according to the present invention including a tiltable extension;
Figure 10 is a cross sectional view of a fourth embodiment of a vehicle console according to the present invention including an alternatively tiltable extension.
Figure 11 is a cross sectional view of a fifth embodiment of a vehicle console according to the present invention including a tiltable visor in the inoperative state; and
Figure 12 is a cross sectional view of the embodiment of Figure 11 in the operative position.

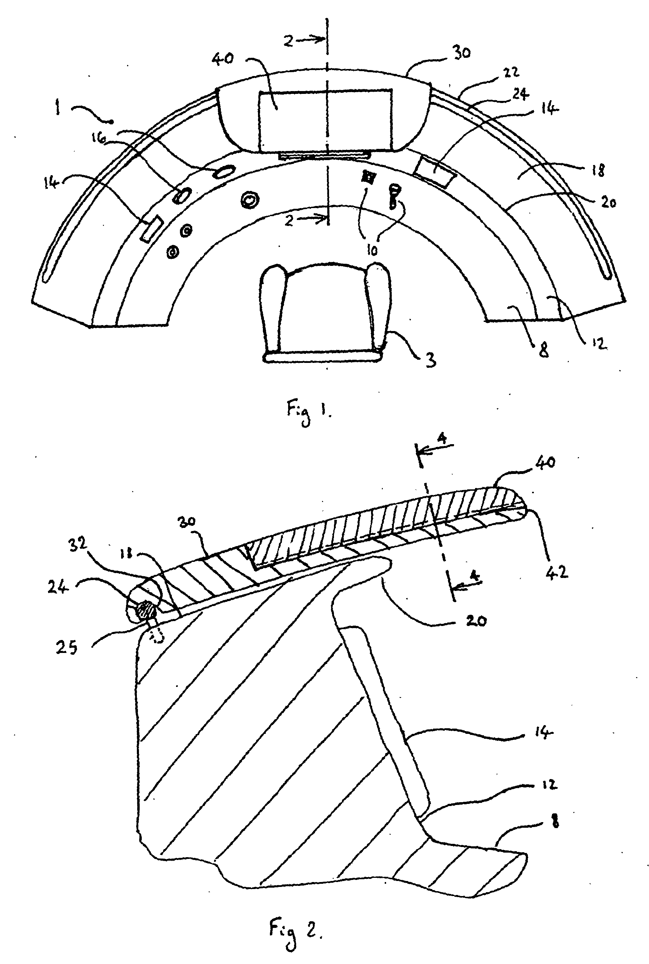

A vehicle console 1 according to the present invention is illustrated generally in Figure 1 indicating the position of the driver's seat 3. The console 1 is of a generally semi-circular or semi-elliptical shape, arranged about the driver in such a fashion that easy access to all surfaces is ensured. Although the console is depicted as curved for ergonomic reasons, it is envisaged that other shapes may equally be considered, including a generally straight console or one involving complex curves e.g. in the case of the driver being located to one side of centre or in the case of a twin console for two drivers as in aircraft cockpits.

The vehicle console 1 incorporates a desk area 8 upon which various controls 10 may be located and an instrument panel 12 including displays 14 and instruments 16. The upper surface 18 of the console 1 is provided with an overhanging lip which protrudes rearwardly towards the driver and acts as a shield 20 against light from above falling upon the instrument panel. For the further definition of the invention the terms forwardly and rearwardly will be used to denote the direction of the front and rear of the vehicle respectively.

At the forward edge 22 of the upper surface 18, there is provided a guide rail 24, the purpose of which will be further described below. The guide rail 24 is shaped to follow the same curve as the console 1 whereby it extends generally parallel to the forward edge 22 over substantially the whole length of the console. Positioned centrally on the shield 20 is a visor 30. The visor 30 is slideably mounted upon the guide rail 24 such that it is moveable along it from one extremity of the console 1 to the other. The visor 30 includes a centrally mounted extension 40.

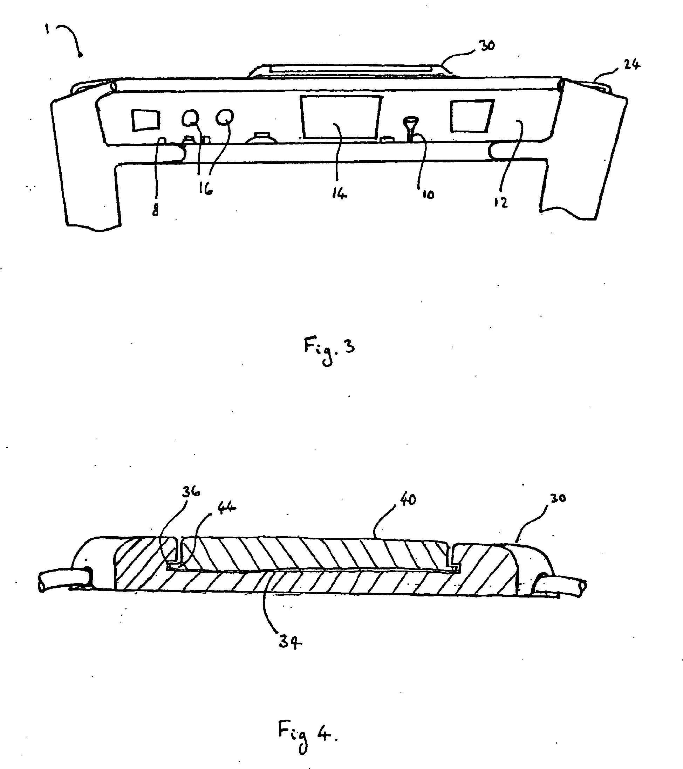

Figure 2 illustrates a cross-section of the console 1 taken along the line 1-1 in Figure 1. In this view it can be seen how the guide rail 24 is connected to the upper surface 18 by supporting elements 25 mounted into the body of the console 1. The supporting elements may be integrally formed as part of the rail and mounted in the console 1 by moulding or glueing. Alternatively they may be arranged as separate elements such as screws, bolts or brackets. In Figure 2 the mounting of the visor 30 on the guide rail 24 is also visible as a generally cylindrical groove 32 in the lower surface of the visor 30 which is adapted to receive the guide rail 24 in a snap-fit arrangement.

As the skilled man will readily understand, other arrangements for mounting the visor 30 may also be envisaged which achieve the same effect as the illustrated embodiment. To this effect, the guide rail 24 may be located at another position with respect to the upper surface 18, either forward thereof or even adjacent the rearward overhanging lip which forms the shield 20. Instead of the snap-fit arrangement, a clamp arrangement may be envisaged. Equally, the guide rail 24 may be replaced by other profile shapes including flat or rectangular sections or the guiding function may instead be achieved by a groove formed in the upper surface 18 into which one or more protuberances associated with the visor 30 may fit, or vice versa.

Figure 3 illustrates a front view of the same console in which the instruments and displays are better visible. From Figures 2 and 3 it can be seen that for ergonomic reasons the upper surface 18 of the console 1 slopes generally forwardly away from the driver. The present arrangement is however equally suited for any other inclination of this surface e.g horizontal or angled rearwardly. The visor 30 is arranged to lie generally parallel to the upper surface 18 when not in use. In this position as better illustrated in Figure 2 it may slightly overhang the edge of the shield 20 to provide additional shade to the displays 14 and instruments 16 lying in its shadow. It is equally within the scope of the present invention that the rearward edge 42 of the visor be arranged flush with the shield such that no additional shadow is produced by the visor when not in use.

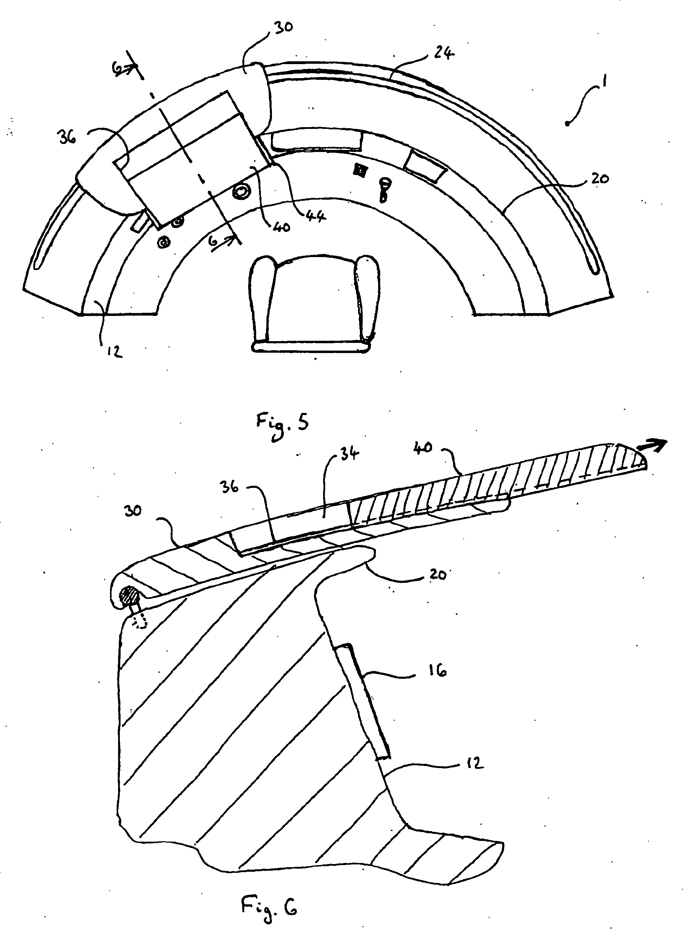

Figure 4 illustrates a detail of Figure 3 looking in the direction of arrow 4-4 on Figure 2. The visor 30 is provided with a generally rectangularly shaped recess 34. Opposite edges of this recess 34 include parallel grooves 36. Extension 40 is arranged within the recess 34 and is provided with rails 44 which engage with grooves 36.

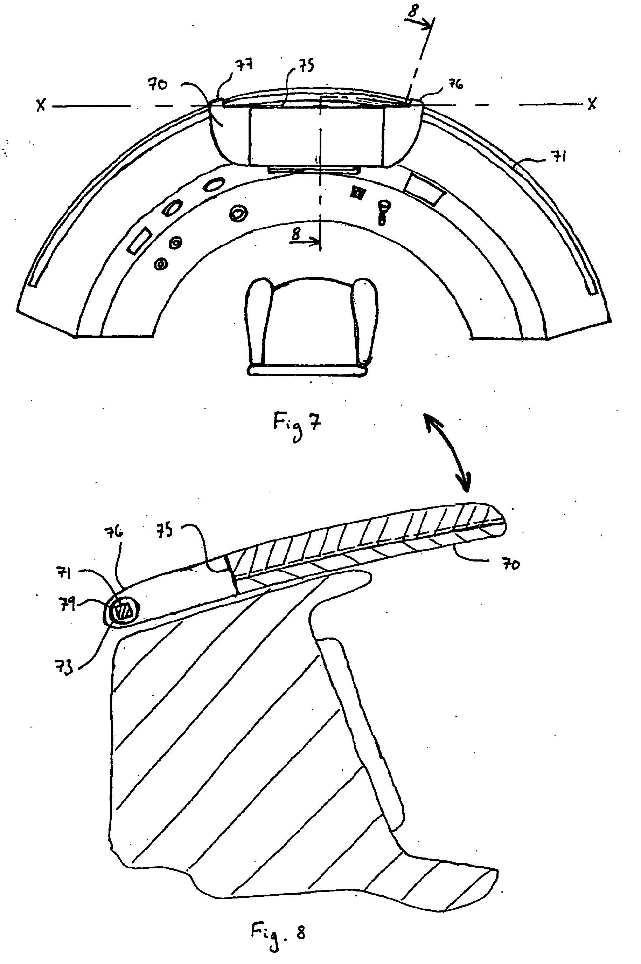

Operation of the visor will now be explained with the aid of Figures 5 and 6 in which like reference numerals are used to denote the same elements as in Figures 1 to 4. When confronted by adverse lighting conditions or glare, as may be caused by sunlight from one side being incident upon the instrument panel 12, the driver may move the visor 30 by sliding it along the guide rail 24 to relocate it at a different position with respect to the shield 20 causing it to cast its shadow onto the affected area of the instrument panel 12. Figure 5 illustrates the visor 30 positioned off centre to the left of the driver. If this arrangement of the visor 30 produces insufficient reduction in glare, the visor extension 40 may be slid out of the visor 30 to increase the overall size of the visor/extension combination thereby increasing the size of the shadow cast on the instrument panel 12. Figures 5 and 6 indicate the extension 40 in a semi-extended position. The grooves 36 and rails 44 by which the extension 40 is arranged in the visor 30 provide sufficient resistance to hold the extension 40 at the desired position. Stop means (not shown) may also be provided to prevent the rails 44 from exiting the grooves 36. It will be apparent to the skilled man that a number of alternative arrangements may be used to enable movement of the extension 40 with respect to the visor 30. For instance, the rails 44 may not extend over the full length of the extension 40 or they may be replaced by pins sliding in the grooves 36 which may then be closed at both ends.

Depending on the orientation of the incident sunlight, it may also be desirable to elevate the visor away from the plane of the shield 20 and the upper surface 18 of the console. Figures 7 and 8 illustrate an alternative embodiment of a visor 70 which is attached to a guide rail 71 by sliding ball joints 73 which can both pivot and slide. Guide rail 71 is in this embodiment constructed of square cross section and supported only at its extremities. Two sliding ball joints 73 formed as generally spherical members provided with square passages therethrough are slideably mounted upon the guide rail 71. The forward edge 75 of the visor 70 is provided at its two lateral extremities 76, 77 with spherical sockets 79 in which the sliding ball joints 73 are received. The sliding ball joints are free to swivel in their respective sockets 79 allowing the visor to be tiltable upwards about the axis X-X despite the fact that the guide rail 71 is not itself straight. In order to allow free tilting movement of the visor 70, the forward edge 75 is cut away as compared to the earlier embodiment.

This arrangement of sliding ball joints is particularly convenient for those cases where the guide rail does not curve with a constant radius or where it follows a complex curve. This is the case whether or not tilting of the whole visor is required. Of course, in the case of a straight guide rail, a tiltable joint may be achieved more simply with cylindrical bushings or other hinge means well known to the skilled person. Where tilting is required, it is envisaged that sufficient friction be provided between the sliding ball joints or bushings and their respective sockets whereby the visor can be maintained in its desired position and will not fall back under its own weight, particularly under the effects of vibration. Alternatively or in addition, additional supporting means may be provided to retain the tilted position of the visor.

While Figures 7 and 8 illustrate an embodiment in which the whole visor 70 may be tilted upwards, it is also envisaged that only a portion of the visor is tiltable. This may easily be achieved by the inclusion of a hinged folding joint whereby a rearward part of the visor is itself tiltable with respect to the forward part. Alternatively or additionally the visor extension may be tiltable.

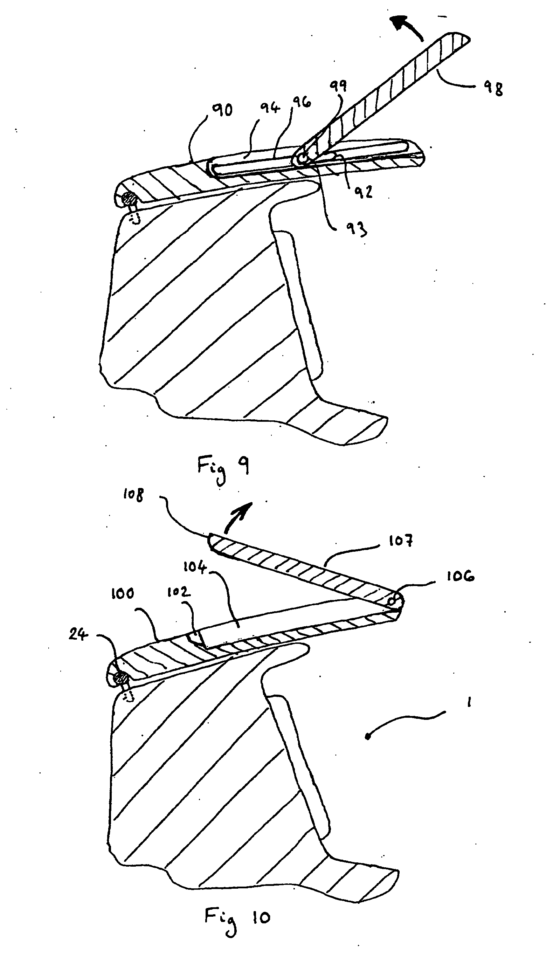

Figure 9 illustrates a third embodiment of the present invention comprising a visor 90 substantially similar to the visor 30 of Figure 1. The visor 90 is provided with a generally rectangular shaped recess 94 including parallel grooves 96 formed along opposite edges. Slidingly received within the grooves 96 are elongate trunnion mountings 92 which include at their forward ends, pins 93 which serve as stub axles. A visor extension 98 of dimensions corresponding to the recess 94 is received within the recess 94. The extension 98 is provided at the forward end of its lateral edges with bores 99 arranged to receive pins 93 to form a pivotable joint. The extension 98 may thus be slid rearwardly with the trunnion mountings 92 sliding in grooves 96 and also pivoted upwards with the pins 93 rotating in bores 99. Again, it is desirable that sufficient friction or other means be provided to ensure that the visor and its extension remain in their chosen positions. While the present arrangement is indicated as using trunnion mountings, other simple elements or combinations of elements may equally be used to achieve the same desired effect without departing from the scope of the invention.

A fourth embodiment of the present invention is illustrated in Figure 10 which is substantially similar to the earlier embodiments. Only those details which differ from above will be described. A visor 100 is slideably mounted to a vehicle console 1 by means of a guide rail 24. The visor 100 is provided with a recess 104 in which a visor extension 107 is received. Unlike the previous embodiments, the extension 107 is pivotable but not slideable with respect to the visor 100. To achieve this movement a hinge 106 is provided adjacent the rearward edges of the visor 100 and the extension 107. To elevate the extension 107, the forward edge 108 may be grasped by means of a depression 102 in the visor 100 or similar means. The extension 107 may then be tilted upwards and rearwards through an angle of 180° or more.

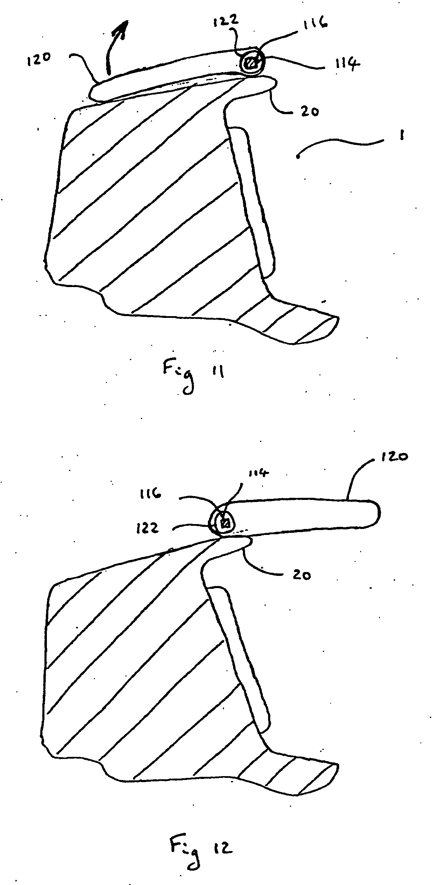

A further embodiment of the present invention is illustrated in Figures 11 and 12 which show in cross section a vehicle console 1. Unlike the previous embodiments the vehicle console 1 is provided with a guide rail 114 located generally rearwardly on the shield 20. The guide rail 114 is of square section and supports two sliding ball joints 116 similar to the embodiment of Figures 7 and 8. A visor 120 is provided with two generally spherical sockets 122 which receive the sliding ball joints 116 such that the visor 120 may be pivoted about an axis drawn through its two sockets 122. While, the present embodiment has been described as including two pivoting ball joints it is equally conceivable that the same result may be achieved using a single sliding and pivoting joint mounted centrally of the visor. A similar central construction is equally valid for the embodiment of Figures 7 and 8.

While the above examples illustrate preferred examples of the present invention it is noted that various other arrangements of visors and shields may also be considered which fall within the scope of the appended claims. The visor may be of a substantially different shape to the described embodiments and may be provided with one or more extensions which serve to extend it in different directions both rearwardly and laterally. Instead of the visor being slideable with respect to the console or shield, it is also conceivable that a plurality of visors may be arranged as segments along the shield, each being foldable or extendable to provide additional shade from light from a particular orientation. The visors and their extensions may be connected together and to the shield or console in any particular way which fulfils the degrees of freedom of movement required. In particular, the extension may be integrally formed together with the visor through the use of plastics technology using bendable or formable materials and living hinges. In the case of a number of non- slideable visors formed as segments, these may be hingedly connected directly to the console or to the rear edge of the shield by hinge means or may be integrally formed therewith through the use of living hinges.

While the present invention has been described in relation to the driver console of a rail vehicle it is also envisaged that it may be applicable to other vehicles where the requirement of increased protection from incident light is present such as in aircraft cockpits, ships, boats, buses, cranes and construction machines.

In circumstances where the location of the visor is inconvenient for the driver to adjust it directly or in circumstances where the nature of the driver's operation is such that this is not permitted, it may be desirable to provide automatic means to move the visor and/or the extension to the desired position. This may take the form of motorised means operable from the drivers console in a similar manner to that used to position car wing mirrors. In particular the visor may be provided with a motor and drive which act upon the guide rail to move the visor there along. A particularly convenient embodiment may utilise the guide rail as the stator of a linear motor. Such a guide rail should in this case preferably be formed of aluminium.

## Claims

1. A vehicle console (1) having an instrument panel (12), a guide (24) extending along the console and a visor (30) slideably mounted to the guide for movement therealong to a chosen location to provide shielding from incident light from a particular direction, **characterised in that** the visor (30) reduces the incident light on the instrument panel (12).

2. A vehicle console according to claim 1 wherein at least part of the visor is tiltable about a generally horizontal axis.

3. A vehicle console according to any preceding claim wherein the visor is itself extendable in its own plane.

4. A vehicle console according to any preceding claim wherein the visor (100) includes an extension (107) and the extension is extendable in the plane of the visor.

5. A vehicle console according to any preceding claim wherein the visor includes an extension and the extension (107) is tiltable out of the plane of the visor.

6. A vehicle console according to any preceding claim wherein the vehicle console is curved about a generally vertical axis and the visor is moveable along the curve.

7. A vehicle console according to any preceding claim wherein the vehicle console is provided with a shield (20) mounted in relation to the console such as to reduce the incidence of light on the instrument panel.

8. A vehicle console according to any preceding claim wherein movement of the visor and/or extension may be completely or partially automated.

9. A vehicle console according to claim 7 or claim 8 in which the visor is provided with drive means which engages with the guide to move the visor along the guide in response to control signals.

10. A vehicle console according to claim 9 in which the guide means is a metallic element and the drive means comprises a linear motor.

11. A vehicle console according to any preceding claim wherein the visor is moveable along the guide from one extremity of the console to the other.

12. A method of reducing incident light on an instrument panel (12) of a vehicle console (1), the method comprising providing a guide (24) extending along the console; providing a moveable visor (30) slideably mounted to the guide; and moving the moveable visor relative to the vehicle console to a chosen location to provide shielding from incident light from a particular direction.

13. The method according to claim 12 in which movement of the visor is executed by driving means.

14. The method according to claim 12 or 13 in which movement of the visor is automated.

15. The method according to claim 12 using a vehicle console according to any of claims 1 to 11.

## Patentansprüche

1. Konsole für Transportmittel (1) mit Instrumententafel (12), einer Führung (24), die sich entlang der Konsole erstreckt, und einem Blendschutz (30), der verschiebbar auf der Führung angebracht ist, um an der Führung entlang in eine gewählte Position bewegt zu werden, um Schutz gegen Einfallslicht aus einer bestimmten Richtung zu gewähren, **dadurch gekennzeichnet, dass** der Blendschutz (30) das Einfallslicht auf die Instrumententafel (12) reduziert.

2. Konsole für Transportmittel nach Anspruch 1, wobei mindestens ein Teil des Blendschutzes um eine im Allgemeinen horizontale Achse geklappt werden kann.

3. Konsole für Transportmittel nach einem der vorhergehenden Ansprüche, wobei der Blendschutz selbst in seiner eigenen Ebene ausziehbar ist.

4. Konsole für Transportmittel nach einem der vorhergehenden Ansprüche, wobei der Blendschutz (100) ein Ansatzstück (107) besitzt und das Ansatzstück in der Ebene des Blendschutzes ausziehbar ist.

5. Konsole für Transportmittel nach einem der vorhergehenden Ansprüche, wobei der Blendschutz ein Ansatzstück besitzt und das Ansatzstück (107) aus der Ebene des Blendschutzes herausklappbar ist.

6. Konsole für Transportmittel nach einem der vorhergehenden Ansprüche, wobei die Konsole für Transportmittel um eine im Allgemeinen vertikale Achse gebogen ist und der Blendschutz entlang des Bogens bewegbar ist.

7. Konsole für Transportmittel nach einem der vorhergehenden Ansprüche, wobei die Konsole für Transportmittel mit einer Abschirmung (20) versehen ist, die so in Verbindung zu der Konsole angebracht ist, dass der Einfall von Licht auf die Instrumententafel reduziert wird.

8. Konsole für Transportmittel nach einem der vorhergehenden Ansprüche, wobei die Bewegung des Blendschutzes und/oder des Ansatzstücks vollständig oder teilweise automatisiert sein kann.

9. Konsole für Transportmittel nach Anspruch 7 oder 8, bei der der Blendschutz mit Antriebsmitteln versehen ist, die mit der Führung verbunden sind, um als Reaktion auf Steuerungssignale den Blendschutz entlang der Führung zu bewegen.

10. Konsole für Transportmittel nach Anspruch 9, bei der die Führungsmittel metallisch sind und die Antriebsmittel einen Linearmotor umfassen.

11. Konsole für Transportmittel nach einem der vorhergehenden Ansprüche, wobei der Blendschutz entlang der Führung von einem Endpunkt der Konsole zum anderen bewegbar ist.

12. Verfahren zur Reduzierung des Einfallslichts auf eine Instrumententafel (12) einer Konsole für Transportmittel (1), umfassend die Ausstattung mit einer Führung (24), die sich entlang der Konsole erstreckt, die Ausstattung mit einem Blendschutz (30), der verschiebbar auf der Führung angebracht ist, und das Bewegen des beweglichen Blendschutzes relativ zur Konsole für Transportmittel in eine gewählte Position, um Schutz gegen Einfallslicht aus einer bestimmten Richtung zu bieten.

13. Verfahren nach Anspruch 12, bei dem das Bewegen des Blendschutzes durch Antriebsmittel erfolgt.

14. Verfahren nach Anspruch 12 oder 13, bei dem das Bewegen des Blendschutzes automatisiert ist.

15. Verfahren nach Anspruch 12 unter Benutzung einer Konsole für Transportmittel nach den Ansprüchen 1 bis 11.

## Revendications

1. Pupitre de commande de véhicule (1) comportant un tableau de bord (12), un guide (24) s'étendant le long du pupitre de commande, et une visière (30) montée de manière coulissante sur le guide pour se déplacer le long de celui-ci, vers un emplacement choisi pour constituer un écran par rapport à la lumière incidente provenant d'une direction particulière, **caractérisé en ce que** la visière (30) réduit la lumière incidente sur le tableau de bord (12).

2. Pupitre de commande de véhicule selon la revendication 1, dans lequel au moins une partie de la visière peut basculer autour d'un axe généralement horizontal.

3. Pupitre de commande de véhicule selon l'une quelconque des revendications précédentes, dans lequel la visière proprement dite peut s'étendre dans son propre plan.

4. Pupitre de commande de véhicule selon l'une quelconque des revendications précédentes, dans lequel la visière (100) inclut une rallonge (107), et la rallonge peut s'étendre dans le plan de la visière.

5. Pupitre de commande de véhicule selon l'une quelconque des revendications précédentes, dans lequel la visière inclut une rallonge, et la rallonge (107) peut basculer en dehors du plan de la visière.

6. Pupitre de commande de véhicule selon l'une quelconque des revendications précédentes, dans lequel le pupitre de commande du véhicule est incurvé autour d'un axe généralement vertical, et la visière peut se déplacer le long de la courbe.

7. Pupitre de commande de véhicule selon l'une quelconque des revendications précédentes, dans lequel le pupitre de commande du véhicule est doté d'un écran (20) monté par rapport au pupitre de commande de manière à réduire l'incidence de la lumière sur le tableau de bord.

8. Tableau de commande de véhicule selon l'une quelconque des revendications précédentes, dans lequel le déplacement de la visière et / ou de la rallonge peut être complètement ou partiellement automatisé.

9. Pupitre de commande de véhicule selon l'une quelconque des revendications 7 ou 8, dans lequel la visière est dotée de moyens d'entraînement qui viennent en prise avec le guide afin de déplacer la visière le long du guide en réponse à des signaux de commande.

10. Pupitre de commande de véhicule selon la revendication 9, dans lequel les moyens de guidage sont constitués d'un élément métallique, et les moyens d'entraînement comprennent un moteur linéaire.

11. Pupitre de commande de véhicule selon l'une quelconque des revendications précédentes, dans lequel la visière peut se déplacer le long du guide d'une extrémité à l'autre du pupitre de commande.

12. Procédé de réduction de la lumière incidente sur un tableau de bord (12) d'un pupitre de commande de véhicule (1), le procédé comprenant la fourniture d'un guide (24) s'étendant le long du pupitre de commande ; la fourniture d'une visière mobile (30) montée de manière coulissante sur le guide ; et le déplacement de la visière mobile par rapport au pupitre de commande du véhicule vers un emplacement choisi pour obtenir un écran contre la lumière incidente provenant d'une direction particulière.

13. Procédé selon la revendication 12, dans lequel le déplacement de la visière est réalisé par les moyens d'entraînement.

14. Procédé selon l'une quelconque des revendications 12 ou 13, dans lequel le déplacement de la visière est automatisé.

15. Procédé selon la revendication 12, utilisant un pupitre de commande de véhicule selon l'une quelconque des revendications 1 à 11.
